# EUROPÄISCHE PATENTSCHRIFT

(11) **EP 3 620 423 B1**
(45) Veröffentlichungstag und Bekanntmachung des Hinweises auf die Patenterteilung: **05.08.2020**
(21) Anmeldenummer: 19194319.0
(22) Anmeldetag: 29.08.2019
(51) Int. Cl.: B66F 9/06, B66F 17/00, G05D 1/02

(54) **FLURFÖRDERZEUG MIT EINER ERKENNUNGSEINHEIT**
INDUSTRIAL TRUCK WITH A DETECTION UNIT
CHARIOT DE MANUTENTION DOTÉ D'UNE UNITÉ DE DÉTECTION

(30) Priorität: 07.09.2018 DE 102018121928
(43) Veröffentlichungstag der Anmeldung: 11.03.2020
(73) Patentinhaber: Jungheinrich Aktiengesellschaft, 22047 Hamburg (DE)
(72) Erfinder: Göpner, Oliver, 23845 Oering (DE); Dierks, Joachim, 21079 Hamburg (DE)
(74) Vertreter: Hauck Patentanwaltspartnerschaft mbB

(56) Entgegenhaltungen:
- EP-A2- 2 678 748
- DE-A1-102015 113 445

## Beschreibung

Die vorliegende Erfindung betrifft ein Flurförderzeug mit einer Erkennungseinheit. Es ist bekannt geworden, für Flurförderzeuge, insbesondere für fernbediente und automatisch fahrende Flurförderzeuge, wie beispielsweise Kommissionierfahrzeuge eine Kartierung des Lagers vorzusehen und die Karte in der Steuerung des Flurförderzeugs zu speichern. Auch ist es bekannt eine zentrale Lagersteuerung bereitzustellen, mit der alle fernbedienten und automatisierten Flurförderzeuge kommunizieren, um ihre Position anzuzeigen. Nachteilig an beiden Ansätzen ist, dass hierfür eine rechenstarke Hardware benötigt und die Umsetzung für mehrere Fahrzeuge komplex ist.

Aus EP 2 678 748 ist ein Flurförderzeug bekannt geworden, das mit einer Erkennungseinheit ausgestattet ist. Die Erkennungseinheit besitzt unterschiedliche Felder, die räumliche Bereiche relativ zu dem Flurförderzeug erfassen. Bei den einzelnen Fällen sind unterschiedliche Funktionen zugeordnet, wobei mit der Objekterkennung stets ein Lenken und ein Ausweichen des Flurförderzeugs verbunden sind. So wird erläutert, dass das Flurförderzeug so lange geradeaus fährt, wie kein Gegenstand in der Umgebung erfasst wird. Wird ein Kantenabschnitt des ausgewählten Objekts nicht länger erfasst, so veranlasst die Steuerung ein Lenkmanöver, um das Fahrzeug wieder in die gewünschte Position relativ zu dem ausgewählten Gegenstand zu bringen. Hierdurch entsteht die Funktion eines wallfollowers, mit der das Flurförderzeug einen konstanten Abstand zu einem Regal einhält. EP 2 678 748 A offenbart den Oberbegriff des Anspruchs 1.

Der vorliegenden Erfindung liegt die Aufgabe zu Grunde für ein Flurförderzeug die Sicherheit im Betrieb zu erhöhen.

Das erfindungsgemäße Flurförderzeug besitzt die Merkmale aus Anspruch 1. Vorteilhafte Ausgestaltungen des Flurförderzeugs bilden die Gegenstände der abhängigen Ansprüche.

Das Flurförderzeug nach Anspruch 1 ist mit einer Erkennungseinheit ausgestattet. Die Erkennungseinheit ist ausgebildet, Gegenstände, Hindernisse, Personen und weitere Objekte zu erkennen. Die Erkennungseinheit kann hierbei als ein Laserscanner ausgebildet sein. Auch ist es möglich Ultraschall, Infrarot oder sonstige Messprinzipien für die Erkennungseinheit einzusetzen. Die Erkennungseinheit ist dazu ausgebildet in mehreren räumlich voneinander getrennten Feldern, eine Belegung des jeweiligen Feldes durch einen Gegenstand zu erkennen. Für das erfindungsgemäße Flurförderzeug ist jedes der Felder in seinen Abmessungen begrenzt und in seiner räumlichen Lage relativ zu dem Flurförderzeug definiert. Solche definierten Felder mit einer relativen Lage zum Flurförderzeug können beispielsweise durch die Auswertung von Entfernungssignalen und Richtungssignalen aus der Erkennungseinheit gebildet werden. Erfindungsgemäß ist vorgesehen, dass mindestens zwei Felder definiert sind, die auf gegenüberliegenden Seiten einer Fahrzeuglängsrichtung angeordnet sind. Die Felder müssen nicht symmetrisch zueinander sein, es kann jedes der Felder anders ausgebildet sein als die anderen Felder. Die Fahrzeuglängsrichtung ist die Mittellängsachse des Fahrzeugs, die sich etwa mittig bezogen auf das Fahrzeug in gerader Linie fortsetzt.

Erfindungsgemäß ist mindestens ein Feld in Fahrtrichtung mindestens teilweise vor dem Fahrzeug angeordnet. Die Anordnung der Felder in Fahrtrichtung vor dem Fahrzeug bedeutet, dass zuerst ein Gegenstand in ein Feld eintritt, bevor das Fahrzeug diesen Gegenstand erreicht. Bei dem erfindungsgemäßen Fahrzeug wird die Belegung der Felder dahingehend ausgewertet, dass wenn keines der mindestens zwei Felder belegt ist, ein Quergang und/oder ein Regalgangende auftreten kann und das Flurförderzeug abgebremst wird. Der besondere Vorteil des Abbremsens des Flurförderzeugs liegt darin, dass Unfälle und Kollisionen mit Fahrzeugen aus dem Quergang vermieden werden können. Im Falle eines Regalgangendes wird eine Kollision oder ein scharfes Abbremsen am Regalende durch das Abbremsen bereits vorbereitet und eingeleitet. Ein weiterer Vorteil ist hierbei auch, dass eine Bedienperson sich bei der Abwicklung ihrer Tätigkeit nicht darauf konzentrieren muss, ob ein Quergang oder ein Regalgangende auftritt.

In einer bevorzugten Ausgestaltung des erfindungsgemäßen Flurförderzeugs wird dieses bei einem Auftreten des Quergangs und/oder des Regalgangendes soweit abgebremst, dass das Flurförderzeug gestoppt ist. Für das so ausgestaltete Flurförderzeug bildet jede Kreuzung mit einem Quergang oder einem Regalgangende in dem Lager eine Stoppstraße, die die Sicherheit für das Fahren in dem Lager erhöht.

In einer bevorzugten Ausgestaltung sind mindestens zwei Paare vorgesehen, von denen mindestens eines der Paare zwei oder mehr Felder aufweist. Durch mehrere Felder in einem Paar kann eine zusätzliche Funktionalität bei der Erkennung des Querganges oder des Regalgangendes dahingehend realisiert werden, dass das Fahrzeug spezifisch auf die Belegung der mehreren Felder reagiert. Es kann bei einem Paar, das beispielsweise mehr als zwei Felder besitzt, unterschieden werden, ob das fahrzeugferne Feld anders belegt ist, als das fahrzeugnahe Feld. Diese Unterscheidung gestattet es, Quergänge und Regalgangenden zu erkennen und entsprechend darauf zu reagieren.

In einer bevorzugten Weiterbildung der Erfindung weist jedes der Felder einen Abstand zu der mittig, bezogen auf das Fahrzeug, positionierten Fahrzeuglängsrichtung auf. Dieser Abstand ist größer als die halbe Fahrzeugbreite, sodass zwischen Fahrzeug und den Feldern ein freier, nicht mit einem Feld belegter Bereich verbleibt. Der verbleibende Bereich kann ebenfalls überwacht werden, durch die Erkennungseinheit oder eine weitere Erkennungseinheit. Auch hier können in dem verbleibenden Bereich gewisse Steuerbefehle für das Flurförderzeug ausgelöst werden. Die mindestens zwei Paare von Feldern für die Erkennung der Quereingänge, sind aber von diesem Bereich unabhängig und sind beabstandet von der Fahrzeuglängsachse vorgesehen.

In einer besonders zweckmäßigen Ausgestaltung weist jedes der Felder eine rechteckige Form auf. Eine rechteckige Form besitzt den Vorteil, dass die Umgebung um das Flurförderzeug mit aneinandergrenzenden Feldern und im Umfang gut zu erfassenden Feldern überwacht werden kann.

In einer bevorzugten Weiterbildung sind die Felder aneinandergrenzend angeordnet. Aneinandergrenzend angeordnet bedeutet hier, dass es keinen wesentlichen Zwischenraum zwischen den in Fahrzeuglängsrichtung hintereinander positionierten Feldern gibt.

Zweckmäßigerweise ist für mindestens eines der Felder die Länge in Fahrzeuglängsrichtung einstellbar. Die Länge der Felder in Fahrzeuglängsrichtung ist eine für das Verhalten des Fahrzeugs an Quer- und/oder Regalendgängen entscheidende Größe. Sind die Felder zu lang gewählt, so kann die Situation auftreten, dass Quergänge nicht erkannt werden. Ist das Feld zu kurz gewählt, so muss das Fahrzeug auf einer kurzen Strecke anhalten, was bei einer hohen Fahrgeschwindigkeit zu einem starken Abbremsen führt. Auch ist die gewählte Länge der Felder abhängig von der Breite der zu erkennenden Gänge. Ein Fahrzeug mit einer einstellbaren Länge für mindestens eines der Felder besitzt zudem den Vorzug, dass es an seine Umgebung angepasst und hierfür eingestellt werden kann.

Auch ist es bei zu groß gewählten Feldern möglich, dass ein Regalendgang oder ein Quergang nicht als solcher erkannt wird, was zu Gefahrensituationen führen kann. Ein zu kurz gewähltes Feld kann demgegenüber dazu führen, dass Gänge fälschlicherweise da detektiert werden, wo keine vorhanden sind, beispielsweise wenn Leerstellen im Regal fälschlicherweise als Quergang oder Regalendgang erfasst werden. Die Abmessungen der Felder haben demnach eine Auswirkung auf die Erkennung. Eine obere Schranke für die Länge des oder der Felder in Längsrichtung ist die Quergangbreite, bevorzugt ist die Gesamtlänge des oder der Felder 0,7 bis 0,9 der Quergangbreite, besonders bevorzugt das 0,8-fache dieser. Bei einer Ausgestaltung mit zwei Feldern in Längsrichtung hintereinander kann das fahrzeugnahe Feld kleiner als das fahrzeugferne Feld ausgebildet sein, wobei hier auch ein bevorzugtes Verhältnis von 0,7 bis 0,9, besonders bevorzugt von 0,8 angenommen wird.

In einer weiteren bevorzugten Ausgestaltung besitzen die Felder eines Paares, sofern mindestens ein Paar mehr als ein Feld aufweist, eine unterschiedliche Breite quer zur Fahrzeuglängsrichtung, wobei bevorzugt das in Fahrzeuglängsrichtung weiter entfernt von dem Flurförderzeug liegende Feld, eine kleinere Breite als das näher zum Fahrzeug liegende Feld besitzt. Die Breite der Felder und damit auch die überwachte Fläche der Felder, eine gleiche Länge der Felder vorausgesetzt, ist für die Überwachung der weiter vom Fahrzeug entfernt liegenden Felder besonders geeignet. Etwaige Ungenauigkeiten in der Erfassung von Gegenständen und Objekten mit zunehmendem Abstand von der Erkennungseinheit werden durch eine Verkleinerung der Felder in ihrer Fläche ausgeglichen, sodass auch eine zuverlässige Überwachung der Belegung für entfernt liegende Felder erfolgen kann.

In einer bevorzugten Ausgestaltung für das Fahrzeug mit mindestens einem Paar, das mehr als ein Feld aufweist, wäre die Belegung der Felder dahingehend auszulesen, dass wenn mindestens ein weiter von dem Fahrzeug entfernt liegendes Feld nicht belegt ist und mindestens ein näher zum Fahrzeug liegendes Feld belegt ist, eine maximal zulässige Geschwindigkeit für das Fahrzeug vorgegeben wird, wobei diese geringer als eine zweite maximal zulässige Geschwindigkeit für das Fahrzeug ist, wenn eines der beiden weiter vom Fahrzeug entfernt liegenden Felder belegt ist. Durch die Einführung einer maximal zulässigen Geschwindigkeit, wenn ein oder mehr vom Fahrzeug entfernt liegende Felder nicht belegt sind, kann ein Abbrems- oder Stoppvorgang vorbereitet werden. Deutet sich also für das entfernt liegende Felder ein Quergang oder ein Regalgangende an, wird eine maximal zulässige Geschwindigkeit vorgegeben. Erst wenn der Fall eintritt, dass keines der Felder belegt ist, wird der Abbremsvorgang eingeleitet und das Fahrzeug bevorzugt zum Stillstand gebracht. Wichtig hierbei ist, dass bei der Vorgabe einer maximal zulässigen Geschwindigkeit ein Flurförderzeug, das mit einer aktuellen Geschwindigkeit größer als die maximal zulässige Geschwindigkeit ist, abgebremst wird, bis es die maximal zulässige Geschwindigkeit erreicht. Ist eine aktuelle Geschwindigkeit unter der maximal zulässigen Geschwindigkeit, so wird nicht in die Fahrgeschwindigkeit eingegriffen.

In einer bevorzugten Weiterführung wird die Belegung der Felder dahingehend ausgelesen, dass wenn jeweils ein weiter von dem Fahrzeug entfernt liegendes Feld wieder belegt und jeweils ein näher an dem Fahrzeug liegendes Feld nicht belegt ist, nach einer vorbestimmten Passierzeit wieder die zweite maximal zulässige Geschwindigkeit vorgegeben wird. Diese Situation tritt auf, wenn beispielsweise ein schmaler Gang passiert wird, bei dem das entfernt liegende Feld bereits wieder belegt ist, wenn das fahrzeug-nahe Feld bereits wieder frei, also nicht mehr belegt ist. Ein solcher schmaler Gang kann beispielsweise für Personen vorgesehen sein, für Fahrzeuge aber zu schmal sein. In diesem Fall kann es somit genügen, das Fahrzeug zu verlangsamen, um Kollisionen mit Personen zu vermeiden. Da kein Querverkehr anderer Fahrzeuge auftreten kann, muss das Fahrzeug nicht zum Stillstand gebracht werden. Mit der Dauer der Passierzeit wird verhindert, dass das Fahrzeug zu früh wieder beschleunigt. Die Dauer der Passierzeit wird, bevorzugt entsprechend der Länge der Felder eingestellt. Je nach Fahrzeug kann sie auch Null betragen.

Bevorzugt ist das Flurförderzeug für den fernbedienten oder automatischen Betrieb vorgesehen und insbesondere als ein Kommissionierfahrzeug ausgebildet. Weiterhin bevorzugt besitzt jedes Paar von Feldern zwei Felder, die zweckmäßigerweise auch symmetrisch zu Fahrzeuglängsachse ausgebildet sind.

Eine bevorzugte Ausgestaltung der Erfindung wird nachfolgend an einem Ausführungsbeispiel erläutert. Es zeigen:
- Figur 1: ein Flurförderzeug mit einer Erkennungseinheit und vier Feldern in einer Ansicht von der Seite,
- Figuren 2-11: Ansichten zur Belegung der Felder der über der Erkennungseinheit und
- Figur 12: eine zusammenfassende Belegungstabelle für die Felder der Erkennungseinheit.

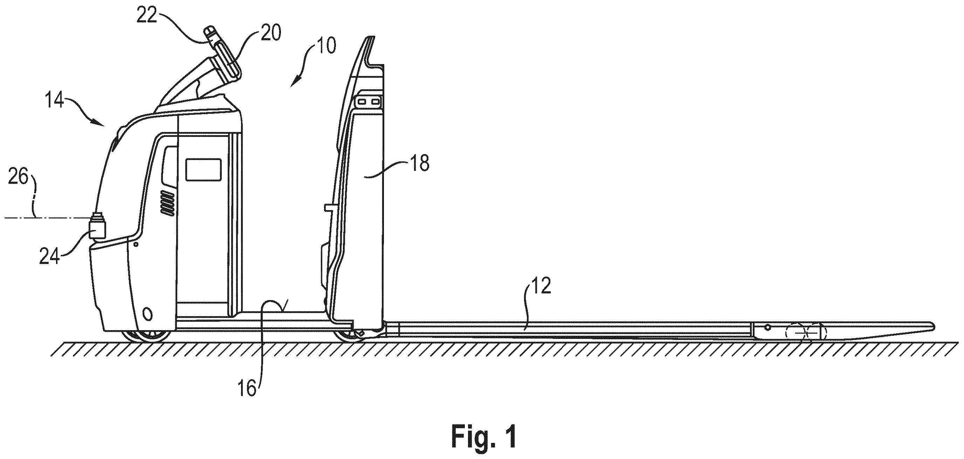

Figur 1 zeigt ein Kommissionierfahrzeug 10, mit einem Paar von Lastgabeln 12 für den Lastteil und einem Antriebsteil 14. Der Antriebsteil 14 besitzt eine Fahrerstandplattform 16, die gegenüber den Lastgabeln 12 durch eine Rückwand 18 begrenzt ist. Das Antriebsteil 14 besitzt für den Fahrer ein Lenkrad 20 als Bedienelement, an dem für einzelne Zusatzfunktionen des Fahrzeugs weitere Schalter, Taster und Wippen 22 angebracht sind.

Auf der von den Lastgabeln 12 fortweisenden Seite des Antriebsteils 14 ist eine als ein Laserscanner 24 ausgebildete Erkennungseinheit vorgesehen. Der Laserscanner 24 tastet über einen Laserstrahl 26 die Umgebung ab und misst aus dem reflektierten Laserstrahl 26 eine Entfernung zu dem reflektierenden Objekt. Aus der Information zu Winkel und Entfernung kann der Laserscanner dann die Position eines Gegenstandes relativ zu dem Flurförderzeug 10 festlegen.

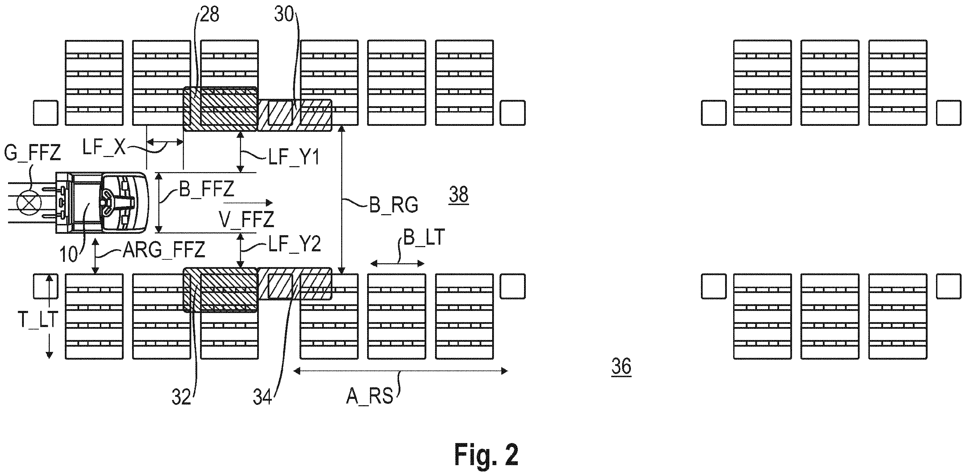

Figur 2 zeigt in einer Ansicht von oben das Flurförderzeug 10 in einem Lager, wobei hier die wesentlichen geometrischen Abmessungen zur Verdeutlichung eingezeichnet sind. Das Flurförderzeug 10 besitzt eine Breite B_FFZ und fährt mit einer Geschwindigkeit in Richtung V_FFZ. Der Geschwindigkeitsvektor V_FFZ ist in Figur 2 genau auf der Fahrzeuglängsrichtung eingezeichnet. Die Figur 2 zeigt vier Felder 28 und 30 sowie 32 und 34. Von diesen vier Feldern bilden die Felder 28 und 30 ein erstes Paar und die Felder 32 und 34 ein zweites Paar. Das erste Paar ist bezogen auf die Fahrtrichtung V_FFZ das linke Paar, während das zweite Paar bezogen auf die Fahrtrichtung das rechte Paar bildet. Weitere relevante Abmessung ist der Abstand der fahrzeugnäheren Felder 28 und 32 gegenüber dem Flurförderzeug 10. Dieser Abstand ist als LF_X eingezeichnet und bezeichnet die Lage des ersten Feldes in X-Richtung. Auch die Lage der fahrzeugnahen Felder 28 und 30 ist gegenüber der Fahrzeugbreite als LF_Y1 und LF_Y2 definiert. Aus der Verwendung von zwei seitlichen Lagerabständen in Y-Richtung ergibt sich, dass der seitliche Abstand der Felder 28 und 32 nicht gleich gegenüber dem Fahrzeug bzw. gegenüber der Fahrzeuglängsrichtung ausgebildet sein muss. Ein weiteres wichtiges Maß zur Bestimmung der Lage, ist der vorgesehene Abstand des Flurförderzeugs von dem Lagerrand ARG_FFZ. Auch dieser Abstand muss nicht auf beiden Seiten des Flurförderzeugs gleich sein. Der zweite Abstand zur Lageranordnung ergibt sich mithilfe der Breite des Regalgangs B_RG. Hier gilt, dass der zweite seitliche Abstand des Flurförderzeugs sich aus der Breite des Regalgangs B_RG, der Breite des Fahrzeugs B_FFZ und dem Abstand gegenüber der Regalanlage ARG_FFZ ergibt. Weitere relevante Größen sind beispielsweise die Tiefe des Ladungsträgers T_LT, der Abstand zwischen zwei Säulen oder Regalträgern A_RS. In Figur 2 ist ebenfalls zu erkennen, dass ein Quergang 36 den Regalgang 38, in dem das Fahrzeug fährt, kreuzt.

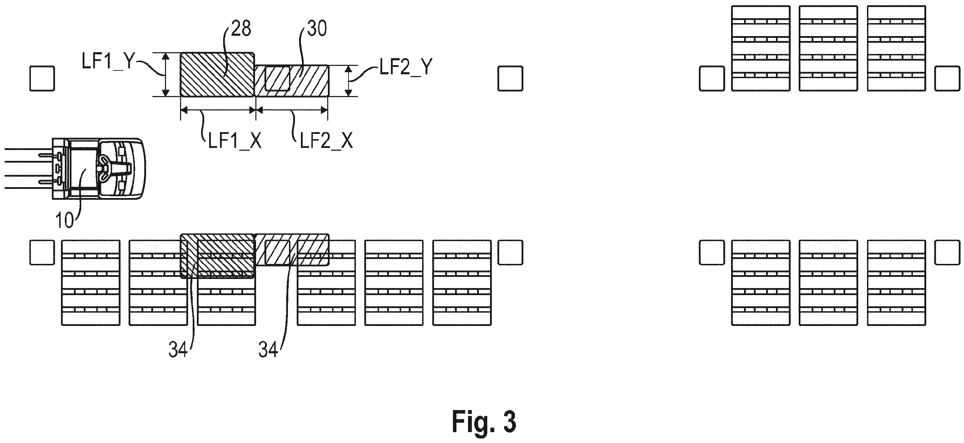

Figur 3 zeigt in einer weiteren Ansicht die genauen geometrischen Abmessungen der Felder 28 und 30. Das fahrzeugnähere Feld 28 besitzt eine Breite quer zur Fahrzeuglängsrichtung LF1_Y und eine Länge LF1_X. Das fahrzeugfernere Feld 30 grenzt direkt an das fahrzeugnähere Feld 28 an. Das fahrzeugfernere Feld 30 besitzt in Fahrzeuglängsrichtung eine Länge LF2_X und in Querrichtung eine Breite LF2_Y. In dem bevorzugten Ausführungsbeispiel aus den Figuren entspricht die Länge der Felder 28 und 30 einander, sodass LF1_X gleich LF2_X ist. Die Breite der Felder quer zur Fahrzeuglängsrichtung ist so gewählt, dass das fahrzeugnähere Feld 28 eine größere Breite als das fahrzeugfernere Feld 30 besitzt, also LF1_Y > LF2_Y. Figur 3 macht auch deutlich, dass die Felder 28, 30 symmetrisch zur Fahrzeuglängsrichtung angeordnet sind, dies bedeutet, dass die Felder 32 und 34 den gleichen Abstand zur Fahrzeuglängsrichtung besitzen.

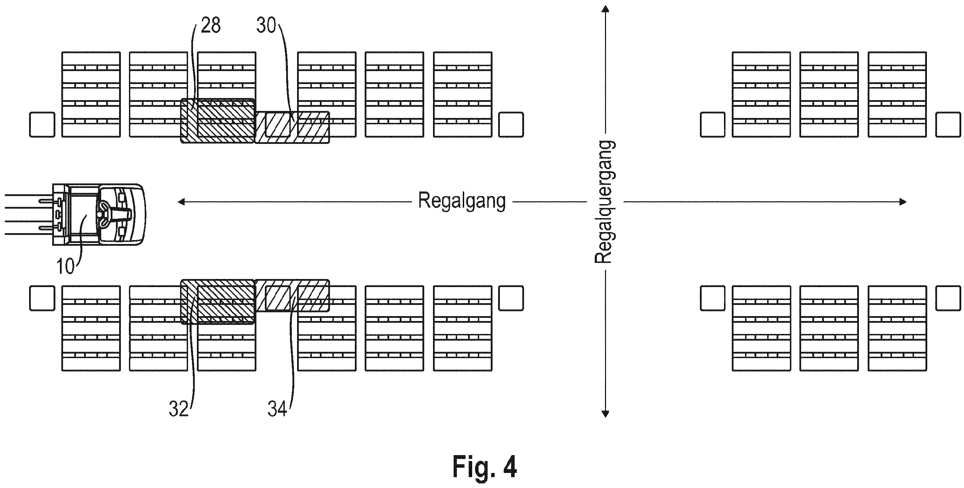

Figur 4 zeigt noch einmal die bereits angesprochene Situation von sich kreuzendem Regalquergang 36 und Regalgang 38. In beiden Gängen können Flurförderzeuge fahren. Bei einem Betrieb der Flurförderzeuge erfordert ein herannahender Quergang oder falls das Fahrzeug in einem Quergang fährt, ein herannahender Regalgang die besondere Aufmerksamkeit des Fahrers. Auch bei fernbedienten Kommissionierfahrzeugen und bei automatisch fahrenden Fahrzeugen bilden sich kreuzende Gänge besondere Anforderungen. Die besonderen Anforderungen rühren daher, dass auch in den Regalquergängen Flurförderzeuge fahren können, sodass im Bereich der Kreuzung stets eine Kollisionsgefahr besteht.

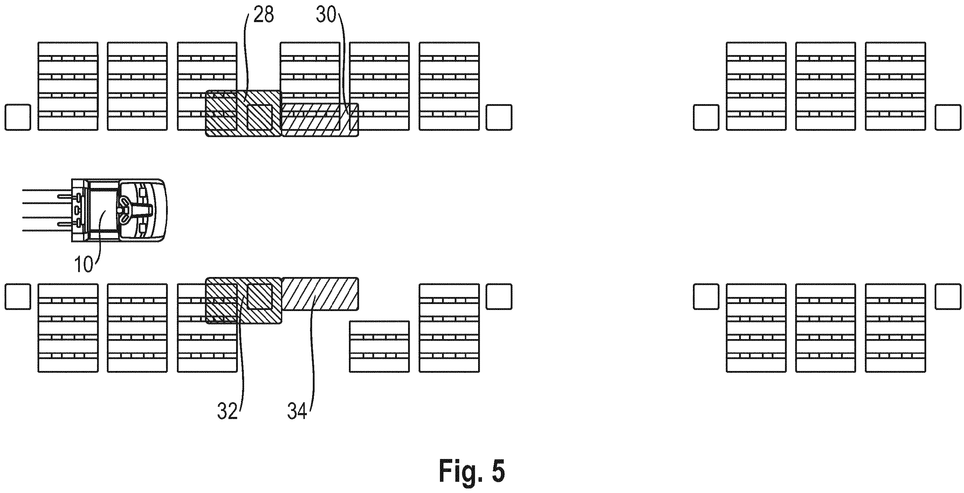

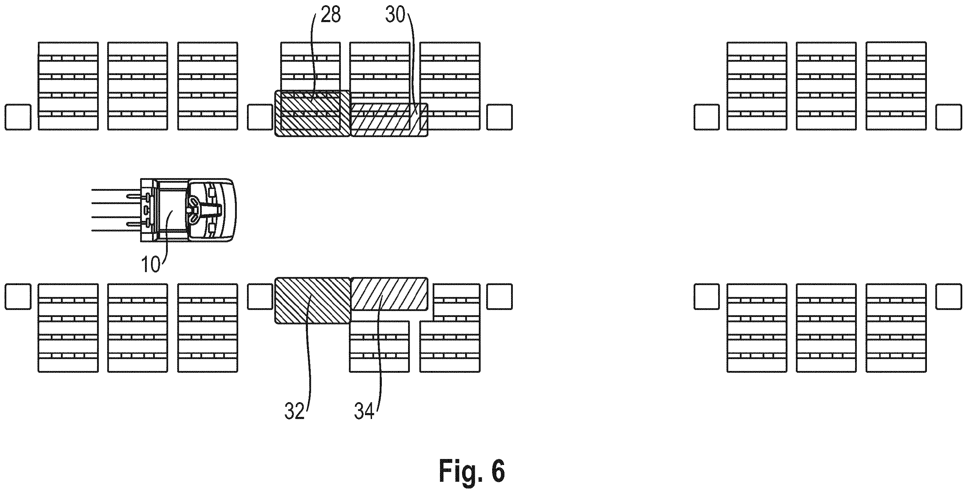

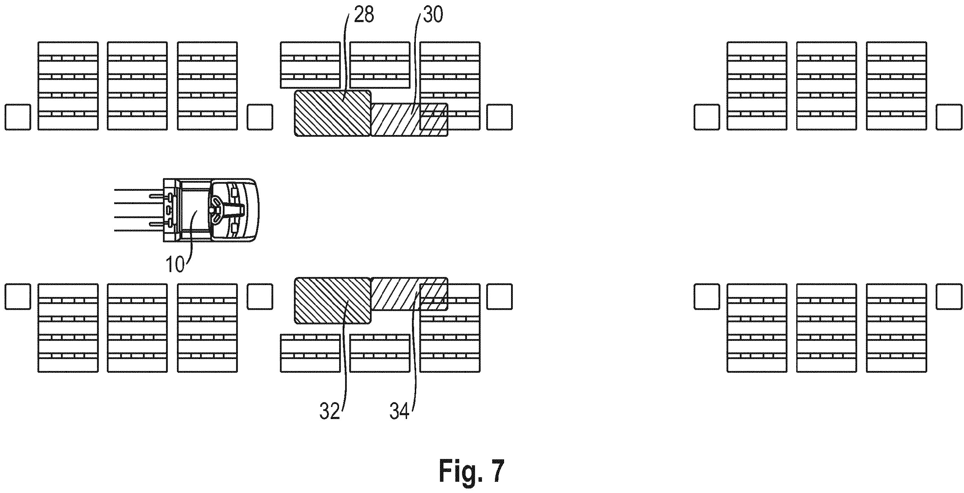

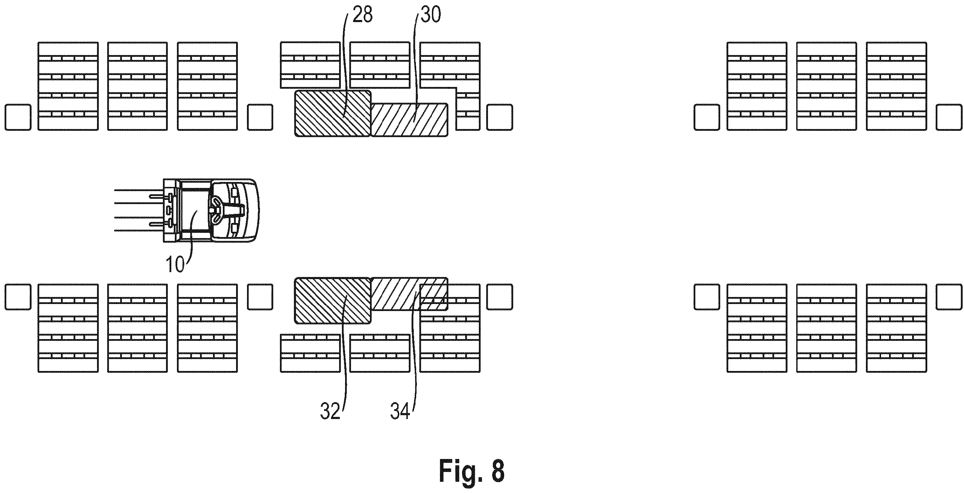

Figuren 5-8 zeigen Situationen, in dem das Flurförderzeug ohne Einschränkung einer maximal zulässigen Höchstgeschwindigkeit fahren darf. Die maximal zulässige Höchstgeschwindigkeit für das Flurförderzeug kann für den Fahrzeugtyp jeweils vorgesehen sein. Auch können Betriebszustände des Fahrzeuges, wie beispielsweise seine Beladung Einfluss auf die maximal zulässige Höchstgeschwindigkeit haben. In Figur 5 sind drei der vier Felder belegt, die Felder 28, 30, 32 erfassen Gegenstände und sind daher belegt, das fahrzeugferne Feld auf der rechten Seite, Feld 34 ist nicht belegt. Bei dieser Belegung liegt kein Grund vor, die Geschwindigkeit des Fahrzeugs 10 zu reduzieren. Figur 6 zeigt eine ähnliche Situation bei der zusätzlich Feld 32 nicht belegt ist. Hier sind nur die Felder auf der linken Seite 28, 30 belegt. Auch in dieser Situation besteht keine Veranlassung die Geschwindigkeit des Flurförderzeugs zu reduzieren. Ebenso stellt sich die Situation in Figur 7 dar, in der nur die fahrzeugfernen Felder 30 und 34 belegt sind, während die fahrzeugnahen Felder 28 und 32 frei sind. Auch die Situation aus Figur 8, in der ein fahrzeugfernes Feld, hier das Feld 34 belegt sind und drei Felder 28, 30, 32 frei bleiben genügt, um einen Eingriff in die maximal zulässige Höchstgeschwindigkeit des Fahrzeugs zu vermeiden. Insbesondere im Hinblick auf eine sich aus dem Übergang von Fig. 7 zu Fig. 8 ergebende Situation kann vorgesehen sein, dass das Ende des Quergangs oder der Einbuchtung erkannt wird, wenn die fahrzeugfernen Felder wieder belegt sind. In diesem Fall kann eine Zeitdauer als Passierzeit abgewartet werden und dann wieder die maximal zulässige Höchstgeschwindigkeit zugelassen werden.

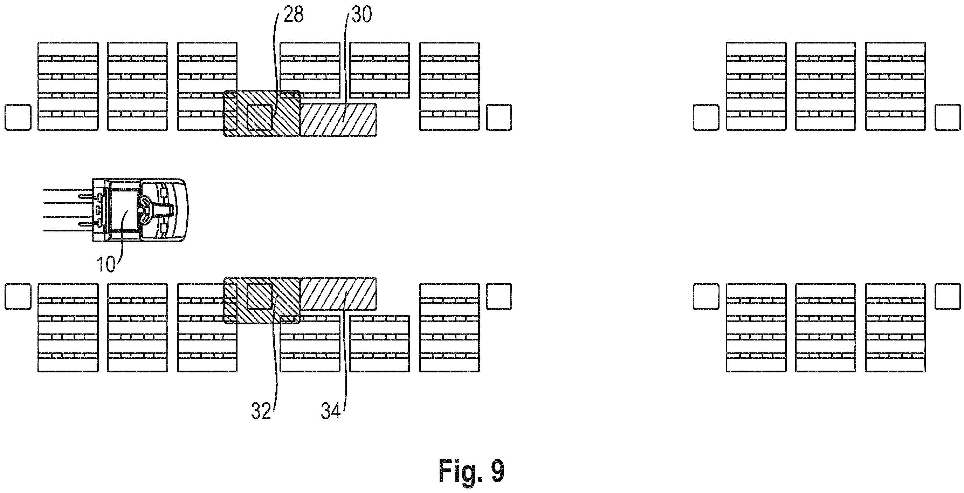

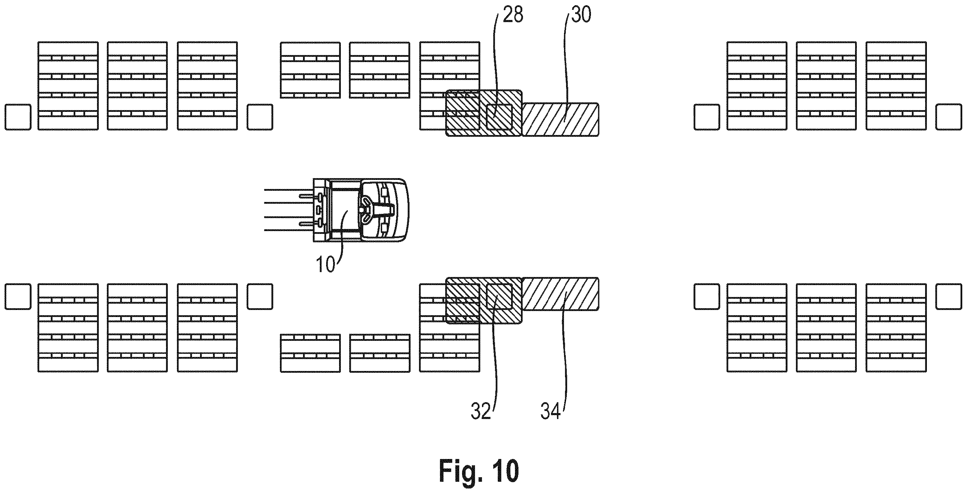

Anders stellt sich die Situation in den Figuren 9 und 10 dar. In beiden Figuren sind die fahrzeugfernen Felder 30, 34 nicht belegt, während die fahrzeugnahen Felder 28, 32 belegt sind. In beiden Situationen, wird die maximal zulässige Höchstgeschwindigkeit für das Fahrzeug reduziert. Das Reduzieren der maximal zulässigen Höchstgeschwindigkeit bedeutet, dass wenn das Flurförderzeug schneller als die reduzierte maximal zulässige Höchstgeschwindigkeit fährt, dass dann die Geschwindigkeit auf die maximal zulässige Geschwindigkeit reduziert wird. Fährt das Fahrzeug jedoch bereits langsamer als die maximal zulässige Höchstgeschwindigkeit, behält es seine aktuelle Geschwindigkeit bei. Wie aus dem Vergleich der Figuren 9 und 10 deutlich zu erkennen, bildet die reduzierte maximal zulässige Höchstgeschwindigkeit eine Vorbereitung für einen auftretenden Quergang. Dies trifft in der Situation aus Figur 10 auch tatsächlich zu. In Figur 9 liegt dagegen ein Irrtum vor, da die nicht belegten fahrzeugfernen Felder nicht einen bevorstehenden Quergang ankündigen, sondern lediglich eine beidseitig in den Regalen vorliegende Lücke anzeigen. Aufgrund der endlichen Breite der Felder 30 und 34 kann eine solche Situation nicht vermieden werden.

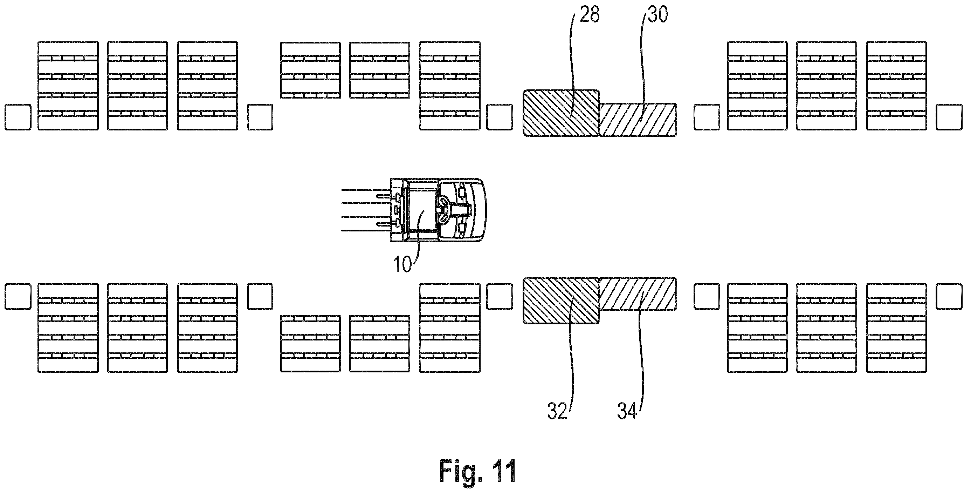

Figur 11 zeigt dann die Situation an, in der alle vier Felder 28-34 frei und nicht belegt sind. Diese Situation löst ein Abbremsen des Flurförderzeugs aus, das schließlich zu einem Stoppen des Fahrzeugs führt. Hierbei ist eine Geschwindigkeit des Bremsens und die Abmessung der Felder so gewählt, dass das Flurförderzeug 10 nicht in den Quergang, sondern vor dem Quergang zum Stoppen kommt.

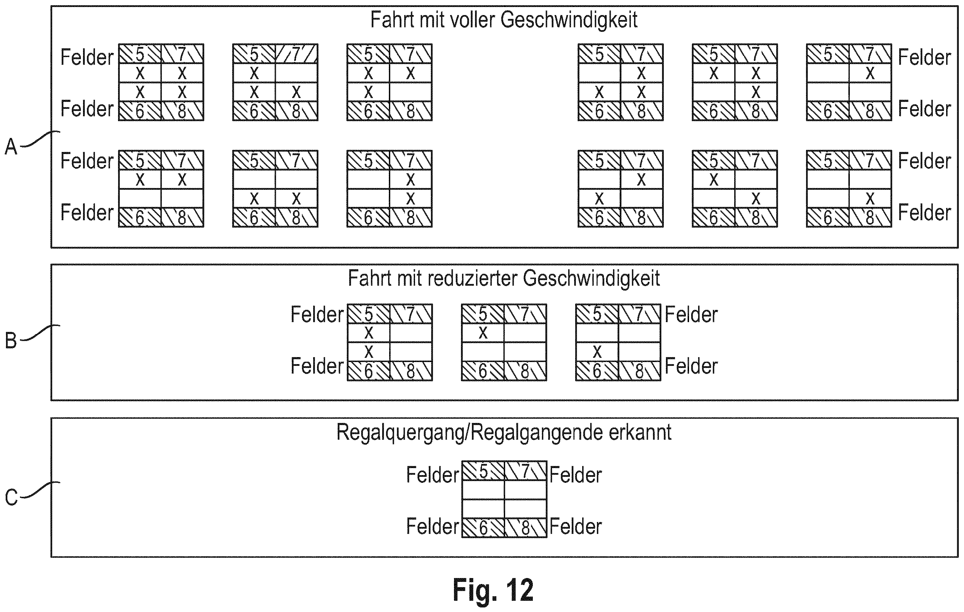

Figur 12 zeigt noch einmal eine Zusammenfassung der Belegung der Felder 5, 6, 7, 8 und das entsprechende Verhalten der Steuerung. Die Felder 5, 6, 7, 8 entsprechen in dieser schematisch dargestellten Anordnung den zuvor besprochenen Felder 28, 30, 32 und 34. Deutlich zu erkennen ist, dass in der Gruppe A der Belegung stets ein Feld 7 oder 8, also ein fahrzeugfernes Feld belegt ist. In dieser Situation ist unabhängig davon, ob eins der fahrzeugnahen Felder 5 oder 6 belegt ist, eine Fahrt mit voller Geschwindigkeit, also mit maximal zulässiger Höchstgeschwindigkeit gestattet ist. Maximal zulässige Höchstgeschwindigkeit bedeutet hier, dass nicht aufgrund der Belegung der Sensoren geschwindigkeitsreduzierend in die Steuerung eingegriffen wird.

Feld B betrifft drei mögliche Belegungen der Sensoren 5 bis 8, in denen ein Fahren des Flurförderzeugs 10 nur mit einer reduzierten Geschwindigkeit möglich ist. Diese Situation betrifft die Belegungen, in denen die fahrzeugfernen Felder jeweils frei und eines oder beide der fahrzeugnahen Felder belegt sind. In dieser Situation wird die maximal zulässige Fahrgeschwindigkeit eingeschränkt.

Mit C ist die Belegung der Sensoren gekennzeichnet, bei der kein Sensor belegt ist, hiermit wird ein Quergang erkannt und das Fahrzeug wird in seiner Geschwindigkeit deutlich reduziert oder zum Stillstand gebracht.

Die vorliegende Erfindung bereichert die Sicherheitsmaßnahmen für Flurförderzeuge in einem Lager. Sie ist besonders geeignet für fernbediente und automatische Kommissionierfahrzeuge die in Lagern mit Quergängen eingesetzt werden sollen. Durch ein Abstoppen an einem Quergang und bevorzugt auch eine Reduzierung der Geschwindigkeit bei einem drohenden Quergang wird die Bedienung der Fahrzeuge deutlich sicherer.

### Bezugszeichenliste

- 5: Feld (Sensor)
- 6: Feld
- 7: Feld
- 8: Feld
- 10: Flurförderzeug
- 12: Lastgabeln
- 14: Antrieb steil
- 16: Fahrerstandplattform
- 18: Rückwand
- 20: Lenkrad
- 22: Wippen
- 24: Laserscanner
- 26: Laserstrahl
- 28: Feld
- 30: Feld
- 32: Feld
- 34: Feld
- 36: Quergang
- 38: Regalgang

## Patentansprüche

1. Flurförderzeug (10) mit einer Erkennungseinheit, die dazu ausgebildet ist in mehreren räumlich voneinander getrennten Feldern (28, 30, 32, 34) eine Belegung des jeweiligen Feldes (28, 30, 32, 34) durch einen Gegenstand zu erkennen, wobei jedes der Felder (28, 30, 32, 34) in seinen Abmessungen begrenzt und in seiner räumlichen Lage relativ zu dem Flurförderzeug (10) definiert ist, wobei mindestens zwei Felder (28, 30, 32, 34) vorgesehen sind, die auf gegenüberliegenden Seiten einer Fahrzeuglängsrichtung und in Fahrtrichtung mindestens teilweise vor dem Fahrzeug angeordnet sind, **dadurch gekennzeichnet, dass** eine Belegung der mindestens zwei Felder (28, 30, 32, 34) dahingehend ausgewertet wird, dass wenn keines der mindestens zwei Felder (28, 30, 32, 34) belegt ist, ein Quergang (36) und/oder ein Regalgangende auftreten kann und das Flurförderzeug (10) abgebremst wird.

2. Flurförderzeug (10) nach Anspruch 1, **dadurch gekennzeichnet, dass** wenn ein Quergang (36) und/oder ein Regalgangende auftreten kann, das Flurförderzeug (10) gestoppt wird.

3. Flurförderzeug nach Anspruch 1 oder 2, **dadurch gekennzeichnet, dass** mindestens zwei Paare von Feldern vorgesehen sind, von denen mindestens ein Paar zwei oder mehr in Fahrzeuglängsrichtung hintereinander angeordnete Felder (28, 30, 32, 34) aufweist.

4. Flurförderzeug (10) nach einem der Ansprüche 1 bis 3, **dadurch gekennzeichnet, dass** jedes der Felder (28, 30, 32, 34) einen Abstand zu der mittig bezogen das Fahrzeug positionierten Fahrzeuglängsrichtung aufweist, der größer als die Halbe Fahrzeugbreite ist, so dass zwischen Fahrzeug und den Feldern (28, 30, 32, 34) ein Bereich verbleibt.

5. Flurförderzeug (10) nach einem der Ansprüche 1 bis 4, **dadurch gekennzeichnet, dass** jedes der Felder (28, 30, 32, 34) eine rechteckige Form aufweist.

6. Flurförderzeug (10) nach einem der Ansprüche 2 bis 5, **dadurch gekennzeichnet, dass** wenn eines der Paare mehr als ein Feld besitzt, die Felder (28, 30, 32, 34) dieses Paares aneinandergrenzen.

7. Flurförderzeug (10) nach einem der Ansprüche 1 bis 6, **dadurch gekennzeichnet, dass** für mindestens eines der Felder die Länge in Fahrzeuglängsrichtung einstellbar ist.

8. Flurförderzeug (10) nach einem der Ansprüche 2 bis 7, **dadurch gekennzeichnet, dass** die Felder (28, 30, 32, 34) mindestens eines Paares eine unterschiedliche Breite quer zur Fahrzeuglängsrichtung besitzen, wobei das in Fahrzeuglängsrichtung weiter entfernt von dem Flurförderzeug (10) liegende Feld (28, 30, 32, 34) eine kleinere Breite als das näher zum Fahrzeug liegende Feld (28, 30, 32, 34) besitzt.

9. Flurförderzeug (10) nach einem der Ansprüche 1 bis 8, **dadurch gekennzeichnet, dass** die Belegung der Felder (28, 30, 32, 34) dahingehend ausgelesen wird, dass wenn mindestens eines der Paare mehrere Felder aufweist und jeweils ein weiter von dem Fahrzeug entfernt liegendes Feld (30, 34) nicht belegt und mindestens ein näher an dem Fahrzeug liegendes Feld belegt ist, eine maximal zulässige Geschwindigkeit für das Fahrzeug vorgegeben wird, wobei diese geringer ist als eine zweite maximal zulässige Geschwindigkeit für das Fahrzeug, wenn alle Felder (30, 34) belegt sind.

10. Flurförderzeug (10) nach Anspruch 9, **dadurch gekennzeichnet, dass** die Belegung der Felder (28, 30, 32, 34) dahingehend ausgelesen wird, dass wenn jeweils ein weiter von dem Fahrzeug entfernt liegendes Feld (30, 40) wieder belegt und jeweils ein näher an dem Fahrzeug liegendes Feld nicht belegt ist, nach einer vorbestimmten Passierzeit wieder die zweite maximal zulässige Geschwindigkeit vorgegeben wird.

11. Flurförderzeug (10) nach einem der Ansprüche 1 bis 10, **dadurch gekennzeichnet, dass** ein fernbedienter oder ein automatischer Fahrbetrieb für das Flurförderzeug (10) vorgesehen ist.

12. Flurförderzeug (10) nach einem der Ansprüche 1 bis 11, **dadurch gekennzeichnet, dass** das Flurförderzeug (10) als ein Kommissionierfahrzeug ausgebildet ist.

13. Flurförderzeug (10) nach einem der Ansprüche 3 bis 12, **dadurch gekennzeichnet, dass** jedes Paar zwei Felder aufweist.

14. Flurförderzeug (10) nach Anspruch 13, **dadurch gekennzeichnet, dass** die beiden Felder symmetrisch zur Fahrzeuglängsachse ausgebildet sind.

## Claims

1. Industrial truck (10) comprising a detection unit which is designed to detect in a plurality of spatially separated fields (28, 30, 32, 34) an occupation of the respective field (28, 30, 32, 34) by an object, wherein each of the fields (28, 30, 32, 34) is limited in its dimensions and defined in its spatial position relative to the industrial truck (10), wherein at least two fields (28, 30, 32, 34) are provided, which are arranged on opposite sides of a longitudinal direction of the vehicle and at least partially in front of the vehicle in the direction of travel, **characterized in that** an occupancy of the at least two fields (28, 30, 32, 34) is evaluated in such a way that if none of the at least two fields (28, 30, 32, 34) is occupied, a transverse aisle (36) and/or a rack end can occur and the industrial truck (10) is decelerated.

2. Industrial truck (10) according to claim 1, **characterized in that** if a transverse aisle (36) and/or a shelf end can occur, the industrial truck (10) is stopped.

3. Industrial truck according to claim 1 or 2, **characterized in that** at least two pairs of fields are provided, of which at least one pair comprises two or more fields (28, 30, 32, 34) arranged one behind the other in the longitudinal direction of the vehicle.

4. Industrial truck (10) according to one of claims 1 to 3, **characterized in that** each of the fields (28, 30, 32, 34) comprises a distance from the longitudinal direction of the vehicle positioned centrally relative to the vehicle which is greater than half the vehicle width, so that a region remains between the vehicle and the fields (28, 30, 32, 34).

5. Industrial truck (10) according to one of claims 1 to 4, **characterized in that** each of the fields (28, 30, 32, 34) exhibits a rectangular shape.

6. Industrial truck (10) according to one of claims 2 to 5, **characterized in that** if one of the pairs comprises more than one field, the fields (28, 30, 32, 34) of this pair are adjacent to each other.

7. Industrial truck (10) according to one of claims 1 to 6, **characterized in that** for at least one of the fields the length in the longitudinal direction of the vehicle is adjustable.

8. Industrial truck (10) according to one of claims 2 to 7, **characterized in that** the fields (28, 30, 32, 34) of at least one pair have a different width transversely to the longitudinal direction of the vehicle, the field (28, 30, 32, 34) lying further away from the industrial truck (10) in the longitudinal direction of the vehicle having a smaller width than the field (28, 30, 32, 34) lying closer to the vehicle.

9. Industrial truck (10) according to one of claims 1 to 8, **characterized in that** the occupancy of the fields (28, 30, 32, 34) is read out to the effect that if at least one of the pairs comprises a plurality of fields and in each case one field (30, 34) lying further away from the vehicle is not occupied and at least one field lying closer to the vehicle is occupied, a maximum permissible speed is prescribed for the vehicle, this speed being slower than a second maximum permissible speed for the vehicle if all the fields (30, 34) are occupied.

10. Industrial truck (10) according to claim 9, **characterized in that** the occupancy of the fields (28, 30, 32, 34) is read out in such a way that if both a field (30, 40) lying further away from the vehicle is occupied again and a field lying closer to the vehicle is not occupied, the second maximum permissible speed is set again after a predetermined passing time.

11. Industrial truck (10) according to one of claims 1 to 10, **characterized in that** a remote-controlled or automatic driving mode is provided for the industrial truck (10).

12. Industrial truck (10) according to one of claims 1 to 11, **characterized in that** the industrial truck (10) is designed as a commissioning vehicle.

13. Industrial truck (10) according to one of claims 3 to 12, **characterized in that** each pair comprises two fields.

14. Industrial truck (10) according to claim 13, **characterized in that** the two fields are configured symmetrically to the longitudinal axis of the vehicle

## Revendications

1. Chariot de manutention (10) doté d'une unité de détection, qui est conçue de manière à détecter dans plusieurs champs (28, 30, 32, 34) séparés spatialement les uns des autres l'occupation du champ respectif (28, 30, 32, 34) par un objet, sachant que chacun des champs (28, 30, 32, 34) est limité dans ses dimensions et est défini dans sa position spatiale par rapport au chariot de manutention (10), sachant qu'au moins deux champs (28, 30, 32, 34) sont prévus, qui sont disposés sur les côté opposés d'un sens longitudinal du véhicule et au moins en partie devant le véhicule dans le sens de déplacement, **caractérisé en ce qu'**une occupation des deux champs (28, 30, 32, 34) au moins est analysée de sorte qu'un couloir transversal (36) et/ou une fin de couloir de rayonnage peuvent apparaître et le chariot de manutention (10) ralentit quand aucun des deux champs (28, 30, 32, 34) au moins n'est occupé.

2. Chariot de manutention (10) selon la revendication 1, **caractérisé en ce que** le chariot de manutention (10) s'arrête quand un couloir transversal (36) et/ou une fin de couloir de rayonnage peuvent apparaître.

3. Chariot de manutention selon la revendication 1 ou 2, **caractérisé en ce qu'**au moins deux paires de champs sont prévues, parmi lesquelles au moins une paire présente deux champs (28, 30, 32, 34) ou plus disposés les uns derrière les autres dans le sens longitudinal du véhicule.

4. Chariot de manutention (10) selon l'une des revendications 1 à 3, **caractérisé en ce que** chacun des champs (28, 30, 32, 34) présente un écartement par rapport au sens longitudinal du véhicule positionné au centre du chariot, qui est supérieur à la moitié de la largeur de véhicule, si bien qu'il reste un espace entre le chariot et les champs (28, 30, 32, 34).

5. Chariot de manutention (10) selon l'une des revendications 1 à 4, **caractérisé en ce que** chacun des champs (28, 30, 32, 34) présente une forme rectangulaire.

6. Chariot de manutention (10) selon l'une des revendications 2 à 5, **caractérisé en ce que**, si l'une des paires possède plus d'un champ, les champs (28, 30, 32, 34) de cette paire sont contigus.

7. Chariot de manutention (10) selon l'une des revendications 1 à 6, **caractérisé en ce que** la longueur de l'un des champs au moins est réglable dans le sens longitudinal du véhicule.

8. Chariot de manutention (10) selon l'une des revendications 2 à 7, **caractérisé en ce que** les champs (28, 30, 32, 34) d'au moins une paire possèdent une largeur différente à la perpendiculaire du sens longitudinal du chariot, sachant que le champ (28, 30, 32, 34) se trouvant le plus éloigné du chariot de manutention (10) dans le sens longitudinal du véhicule a une plus petite largeur que le champ (28, 30, 32, 34) situé le plus près du chariot.

9. Chariot de manutention (10) selon l'une des revendications 1 à 8, **caractérisé en ce que** l'occupation des champs (28, 30, 32, 34) est choisie de sorte qu'une vitesse maximale admissible du véhicule est prédéfinie lorsqu'au moins l'une des paires présente plusieurs champs, que respectivement un champ (30, 34) se trouvant le plus éloigné du chariot n'est pas occupé et au moins un champ situé le plus près du chariot est occupé, sachant que cette vitesse est plus faible qu'une seconde vitesse maximale admissible du véhicule, lorsque tous les champs (30, 34) sont occupés.

10. Chariot de manutention (10) selon la revendication 9, **caractérisé en ce que** l'occupation des champs (28, 30, 32, 34) est choisie de sorte que la seconde vitesse maximale admissible est de nouveau prédéfinie après un temps écoulé prédéterminé lorsque respectivement un champ (30, 40) se trouvant le plus éloigné du chariot est réoccupé et respectivement un champ situé le plus près du chariot n'est pas occupé.

11. Chariot de manutention (10) selon l'une des revendications 1 à 10, **caractérisé en ce qu'**un mode de déplacement automatique ou télécommandé est prévu pour le chariot de manutention (10).

12. Chariot de manutention (10) selon l'une des revendications 1 à 11, **caractérisé en ce que** le chariot de manutention (10) est conçu comme un véhicule de préparation de commandes.

13. Chariot de manutention (10) selon l'une des revendications 3 à 12, **caractérisé en ce que** chaque paire présente deux champs.

14. Chariot de manutention (10) selon la revendication 13, **caractérisé en ce que** les deux champs sont conçus symétriquement par rapport à l'axe longitudinal du véhicule.
